# EUROPEAN PATENT APPLICATION

(11) **EP 0 698 801 A1**
(43) Date of publication of application: **28.02.1996**
(21) Application number: 95902996.8
(22) Date of filing: 20.12.1994
(51) Int. Cl.: G02C 5/20

(54) **CUSHIONING END PIECE ADJUSTING MECHANISM OF TEMPLE FOR SPECTACLES AND ADJUSTING TYPE CUSHIONING END PIECE FOR USE IN SAME**

(30) Priority: 19.01.1994 JP 3974/94
(71) Applicant: MASUNAGA OPTICAL MFG. Co., LTD., Fukui-shi, Fukui 910-37 (JP)
(72) Inventor: MASUNAGA, Satoru, Fukui-shi, Fukui 910-37 (JP)
(74) Representative: Pearce, Anthony Richmond
(86) International application number: JP9402146
(87) International publication number: WO9520179

(57) **Abstract**

The technical issue of the present invention is to improve on the holding stability of a pair of spectacles on the face that it will never fluctuate from the right place on the face making a full use of high absorption and frictional resistance behavior of end covers against inertia even with large moving inertia suddenly worked on the spectacles on the face by hard movement and further to provide a pair of spectacles which not only can fit each and every wearer by adjusting temples by means of cushion end covers according to the ears shape and the configuration of the head portion around the ears but also is excellent in wear fitness in that it is unnecessary to make the head portion around the ears so tightly interposed with the right-and-left temples as before. And to solve the aforesaid issues the present invention has adopted such a technical means as mounting the end covers made of synthetic resin, having an adjust sleeve capable of slidably moving on the circumference of the temple to be mounted on so as to fix its position, a tip pad to be inserted into the protrusive end portion of the temple and a bow cord curvedly running from the tip pad to the adjust sleeve, on the free end portions of a pair of the right-and-left temples foldably connected to both sides of a front frame.

## Description

### FIELD OF THE INVENTION

The present invention relates to adjusting mechanism of spectacles temples by means of cushion end covers and adjustable cushion end covers used in the same, or more specifically, it relates to the improvement in spectacles end cover portions capable of comfortably fitting around the lower back portions of the ears and the head portions around the ears as well as stably holding a pair of spectacles on the whole and to the structural parts necessary to constitute said end covers, and it serves to disperse the discontent conventionally felt by the eyeglasses wearers in view of wear fitness so that it may greatly stimulate the effectual demand of spectacles on the market.

### BACKGROUND OF THE INVENTION

The design of a pair of spectacles, whether it is intended for the correction of eyesight or sunshade to protect the eyes or the retinas from brilliantly harsh artificial light or sunlight, or only for fashionable purpose, aims to make it as light and comfortable as possible for use, bearing the eyeglasses wearers in mind just because it is no more than an artificial object to the human body. Then, for the purpose of stably holding a pair of spectacles on the face, it is necessary not only to hold the sliding movement in check by supporting the front frame on the nose with a nose pad but also to put the frame closer to the face by surrounding the lower back portion of the ears with end covers at the free end portions of the temples while interposing the head portions around the ears with the right-and-left temples.

However, since moving with a pair of spectacles on the face, in some cases, causes it to fail off or be blown off the face owing to stronger moving inertia instantly worked on the front frame thereof than the strength of interposition between the right-and-left temples and the resistance to restrain the end covers from slacking off, there is high probability of damage on the lenses or frame thereof.

On the other hand, it inconveniences or bothers the wearers a lot when they wear it in ordinary use to prearrange the strength of interposition between the right-and-left temples and the resistance to restrain the end covers from slacking off in accordance with when in hard use. This means, in other words, that there is contradictory proposition between the pursuit of stably holding the glasses and the improvement in comfortable wear fitness thereof.

### DISCLOSURE OF THE INVENTION

The object of the present invention is intended to solve the aforesaid contradictory proposition encountered in a conventional pair of spectacles and to provide a pair of spectacles which can be more stably held on the face in such a manner that it will never fluctuate from the right position on the face even if moving inertia might be suddenly worked on the spectacles on the face by hard movement of the wearers, making a full use of high moving inertia absorption behavior and strong frictional resistance of the end cover portion of the spectacles.

Another object of the present invention is to provide a pair of spectacles which is very comfortable to wear on by elastically and moderately interposing the head portion around the ears with the right-and-left temples and stably holding the front frame at the right place on the face.

Another object of the present invention is to provide a practical pair of spectacles which is excellent in wear fitness, enabling each and every wearer to feel comfortable with it by adjusting the end cover portions of the spectacles in accordance with the ears shape and the configuration of the head portion around the ears.

The further object of the present invention is to provide adjusting mechanism of spectacles temples by means of cushion end covers, enabling the wearers to put on by freely adjusting the contact angle with respect to the head portion around the ears and the tension of cushion end covers in accordance with the change in the curved angle of the free end portions of the temples and the required buffer strength.

### BRIEF DESCRIPTION OF THE DRAWINGS

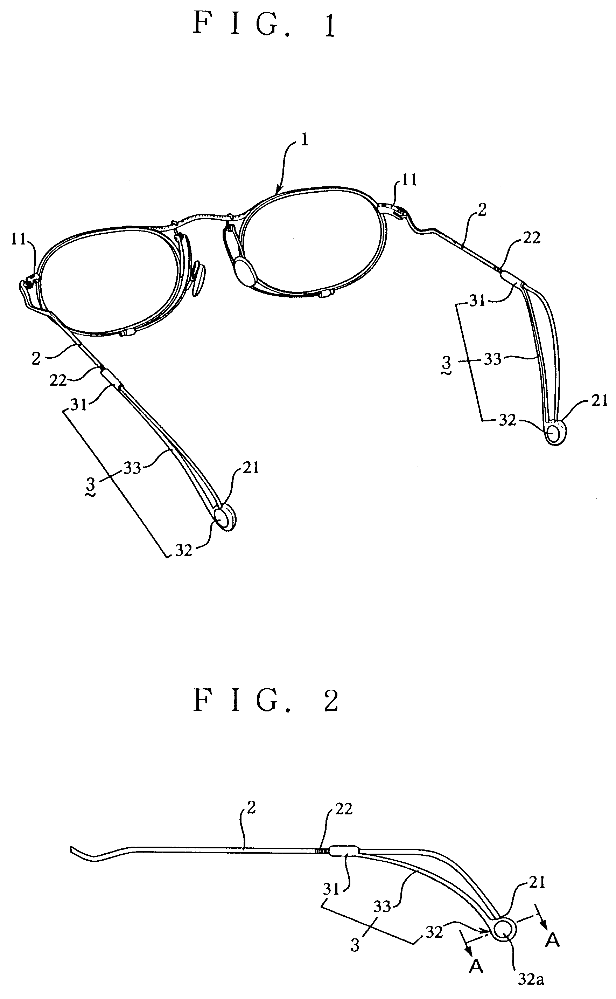

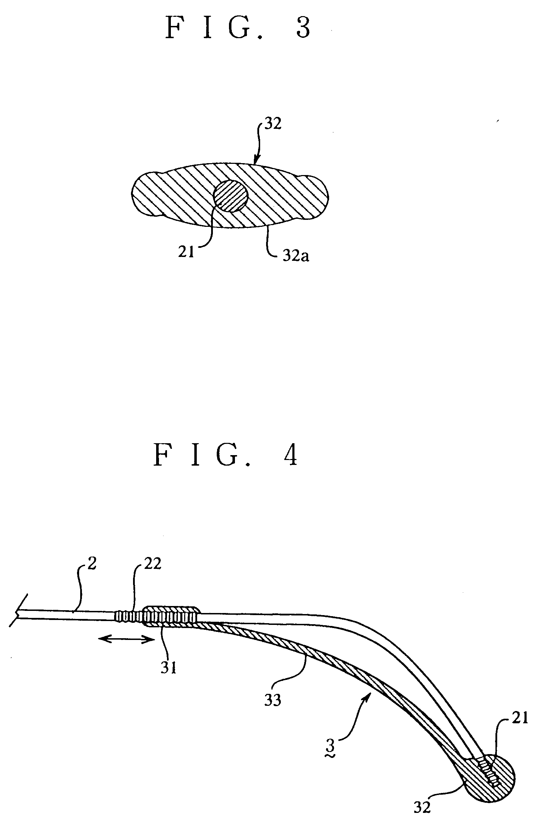

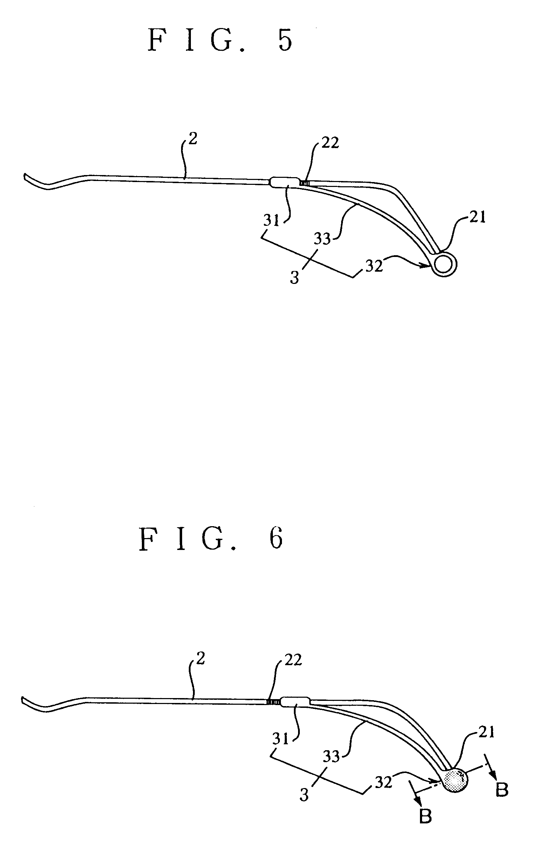

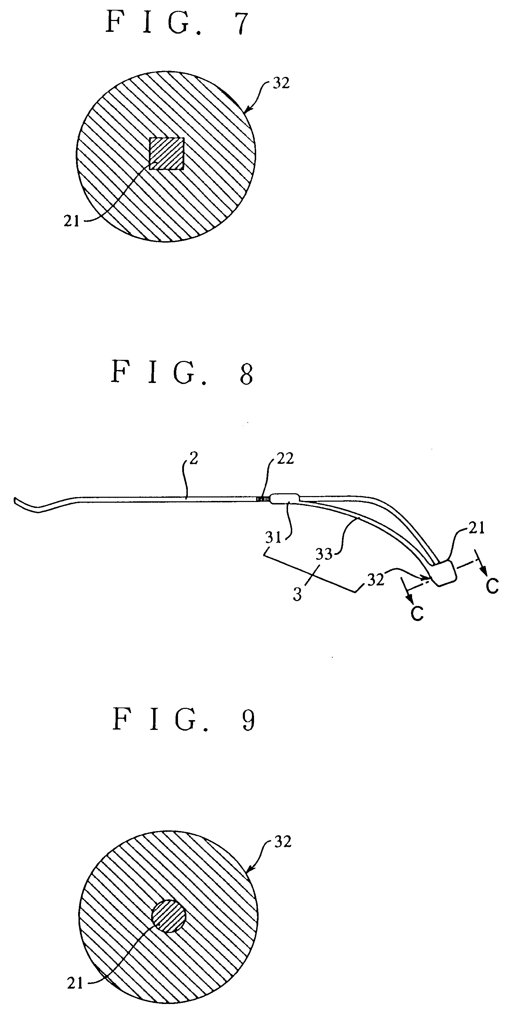

FIG. 1 is a perspective view to describe a pair of spectacles on the whole embodied in the present invention and produced through the application thereof; FIG. 2 is a side elevation view to show the temple on the right side of the spectacles in FIG. 1; FIG. 3 is an enlarged sectional view taken on line A-A of the temple in FIG. 2; FIG. 4 is an enlarged sectional view to show the free end portions of the temple in FIG. 2; FIG. 5 is a side elevation view to show the state where the tension of a bow cord is adjusted by moving an adjust sleeve of cushion end cover on the temple in FIG. 2 to the direction of the front frame; FIG. 6 is a side elevation view to show the first transformation example of a tip pad on the cushion end cover of the spectacles in the present invention into global shape; FIG. 7 is an enlarged sectional view taken on line B-B of the temple of the first transformation example in FIG. 6; FIG. 8 is a side elevation view to show the second transformation example of a tip pad on the cushion end cover of the spectacles in the present invention into cylindrical shape; and FIG. 9 is an enlarged sectional view taken on line C- C of the temple of the second transformation example in FIG. 8.

### BEST MODE FOR CARRYING OUT THE INVENTION

The technical means for the present applicant to have adopted in order to solve the aforesaid technical issues will be described in reference to the accompanying drawings.

Namely, the present invention has solved them at one sweep by adopting adjusting mechanism of spectacles temples by means of cushion end covers (3) made of synthetic resin having an adjust sleeve (31) capable of slidably moving on the circumference of the temple to be fitted on so as to fix its position, a tip pad (32) inserted in a protrusive end portion (21) of the temple (2) and a linear bow cord (33) running from the adjust sleeve (3) to the tip pad (32) and arranged at the free end portions of a pair of the right-and-left temples (2) foldably connected to both sides of a front frame (1).

Hereinafter, the present invention will be described further in details on the basis of embodiment shown in the accompanying drawings.

Numeral (1) in the drawings indicates a front frame, and the whole constitution of the spectacles is completed by pivotably and foldably arranging each temple (2) through hinge brackets (11) at both sides of the frame.

Then, the front frame (1), hinge brackets (11) and temples (2) are all made of metallic material, but it is no trouble either even if they were made of synthetic resin in light of what the present invention is all about.

The present embodiment makes use of cushion end covers (3) in an unique shape made of synthetic resin, integrally molded by adjust sleeves (31) to be fitted on the circumference of the temples (2), tip pads (32) to be inserted in the protrusive end portions of the temples (2) and linear bow cords (33) running from the sleeves (31) to the pads (32). Incidentally, the bow cord (33) of cushion end covers in the present embodiment is thin in breadth having a flat shape so as to be easy to fit on the lower back portion of the ears, and also its texture is very soft to touch.

Then, the aforesaid cushion end cover (3) is made by injection molding of flexible polyester elastmer and constitutes the mechanism to adjust contact relation with the lower back portions of the ears by being fixed on the free end portions of the right-and -left temples (2) in such a manner as mentioned below.

Namely, with a pair of spectacles in the present embodiment, adjusting mechanism by means of cushion end covers can be materialized just by such a extremely easy job as inserting the adjust sleeve (31) of cushion end covers (3) halfway through the temples (2) and inserting the protrusive end portion (21) of the temples (2) into the tip pad (32), and thereby the ear pad portion just like a bowstring or the bow cord (33) running from the adjust sleeve (31) to the tip pad (32) takes shape.

And with the temples (2) in the present embodiment, since notches (22) are cut up over a predetermined length on the area thereof where the adjust sleeve (31) of cushion end covers is placed, it becomes possible to make the adjust sleeve (31) steadily move along the aforesaid notches by a predetermined pitch at a time. Therefore, as shown in Figure 4, moving the adjust sleeve (31) back and forth along the notches of the temples (2) makes it possible to increase or decrease the tension between the adjust sleeve (31) and the tip pad (32) inserted into the protrusive end portion (21) of the temples, and thereby the inclination and tension of the bow cord (33) which plays an important role as cushion in said end covers can be freely adjusted (refer to the state of the free end portion of the temple and the bow cord in Figures 2 and 5).

Also, the tip pad (32) of cushion end covers (3) shown in Figures 1 to 5 in the present embodiment is formed in a disklike shape having an abutting surface (32a) in a round shape and is inserted into the protrusive end portion of the temple (2) so that its directional angle with regard to the head portion around the ears can be altered according to its configuration.

Of course, the tip pad (32) of cushion end covers (3) should not necessarily take such a disklike shape as mentioned above, but it is also good to make it spherical as shown in Figures 6 and 7, and thereby it can always fit each and every wearer irrespective of the inclination and directional angle of the head portion around the ears. And it is further good to make it cylindrical as shown in Figures 8 and 9, in this case, it can improve the holding stability of spectacles because the tip pad is mounted in a recess found in the head portion at the lower back end of the ears.

Also, the cushion end cover (3) as mentioned above is made by injection molding of polyester elastmer, but it is also possible to make it by cast molding of R.T.V. (Room Temperature Vulcanization) type silicon rubber. Silicon rubber is ideal material because the end cover made of this material is better in adhesiveness and texture to the skin. Of course, it is needless to say that the same cushion end cover as mentioned above can be made also by injection molding of heat vulcanization type silicon rubber.

With a pair of spectacles in the present embodiment generally constituted as mentioned above, the free end portion of the temple (2) fits each and every wearer in such a manner that the bow cord (33) of the cushion end cover (3) flexibly surrounds around the lower back portion of the ears according to its peripheral shape and the tip pad (32) stably and firmly attaches the head portion at the lower back end of the ears, and to make the matter better, the wearers will never feel bothered with the spectacles on because of its soft texture to the face and the head portion around the ears.

Additionally, even in hard use of a pair of spectacles in the present embodiment, the aforesaid bow cord (33) responsively deflects and instantly absorbs moving inertia suddenly acting on the spectacles then and also since the tip pads (32) attached to the head portion at the lower back end of the ears firmly holds the sliding movement of the temples (2) in check, it will never inconvenience the wearers by falling off or being blown off the face.

### INDUSTRIAL APPLICABILITY

As having been explained so far with the aforesaid embodiment, with a pair of spectacles produced through the application of the present invention, because the cushion end cover flexibly made of synthetic resin having the adjust sleeve, the tip pad and the linear bow cord running from the adjust sleeve to the tip pad is arranged on the free end portion of the temples on both sides of the front frame, even with the spectacles on the face exposed to hard movement and sudden moving inertia acted upon it, it will never fluctuate from the right place on the face, performing excellent holding stability on the face by making a full use of its high absorptive behavior and strong frictional resistance against the moving inertia.

And since each structural part of the cushion end cover of the spectacles in the present invention synergistically supplements one another in terms of its buffer and restrained friction behavior, the right-and-left temples elastically and moderately interpose the head portion around the ears enabling the wearers to put it on with the front frame stably held at the right place on the face so as to realize better wear fitness. Furthermore, with the adjust sleeve of the cushion end cover on the temple in the spectacles of the present invention, since it is mounted on the temple in such a manner that it can freely move thereon so as to fix its position, it makes it possible for each and every wearer to put it on not only according to the ears shape and the configuration of the head portion around the ears but also by freely adjusting the contact angle with respect to said head portion and tension of the bow cord on end covers in accordance with the change in the curved angle of the free end portion of the temple or the desired buffer strength thereof, and thereby better wear fitness never to be expected for a conventional pair of spectacles can be realized.

In this way, according to the present invention, its industrial utilization is highly valued not only because the difficulties encountered in a conventional pair of spectacles on the face can be greatly improved but also because the constitution of which has been adopted for solving them is very simple ad requires less increase of production cost.

## Claims

1. Adjusting mechanism of spectacles temples by means of cushion end covers comprising a pair of right-and-left temples (2) foldably connected to both sides of a front frame (1), and a cushion end cover (3) mounted on free end portions of the temples and made of synthetic resin, having an adjust sleeve (31) capable of slidably moving on the circumference of the temples to be fitted on so as to fix its position, a tip pad (32) inserted into a protrusive end portion (21) of the temples (2) and a linear bow cord (33) running from the adjust sleeve (31) to the tip pad (32).

2. Adjusting mechanism according to claim 1, wherein the temples (2) are provided with notches (22) on at least the circumference of the portion where the adjust sleeve (31) of the cushion end cover (3) is to slide on and the movement of the sleeve (31) along the notches (22) can be adjusted by a predetermined pitch.

3. Adjusting mechanism according to claim 1 or 2, wherein the tip pad (32) on the cushion end cover (3) is inserted into the protrusive end portion of the temples (2) in such a manner that the pad surface can freely adjust its directional angle with respect to the head portion around the ears.

4. Adjusting mechanism according to any one of the preceeding claims 1-3, wherein the cushion end cover (3) is integrally molded with flexible synthetic resin.

5. A cushion end cover integrally molded with synthetic resin comprising an adjust sleeve (31) to be fitted on the circumference of the temple in the spectacles, a tip pad (32) to be inserted into the protrusive free end portion of the temples (2) and a linear bow cord (33) running from the adjust sleeve (31) to the tip pad (32).

6. A cushion end cover according to claim 5, wherein the cushion end cover is integrally molded with polyester elastmer.

7. A cushion end cover according to claim 5, wherein the cushion end cover is integrally molded with silicon rubber.
